# EUROPEAN PATENT APPLICATION

(11) **EP 4 793 793 A1**
(43) Date of publication of application: **19.08.2026**
(21) Application number: 25158633.5
(22) Date of filing: 18.02.2025
(51) Int. Cl.: G06F 16/3329, G06F 16/9032

(54) **COMPUTER-IMPLEMENTED METHOD FOR AGGREGATING OUTPUTS OF MULTIPLE LMS**

(71) Applicant: ABB SCHWEIZ AG, 5400 Baden (CH)
(72) Inventor: PALACIO, Sebastian, 69221 Dossenheim (DE); ASHIWAL, Virendra, 68542 Heddesheim (DE); RITTER, Marcus, 64297 Darmstadt (DE); SCHOCH, Nicolai, 69120 Heidelberg (DE)
(74) Representative: Maiwald GmbH

(57) **Abstract**

The computer-implemented method for aggregating outputs of multiple language models involves several steps. It determines calibration information of each of the multiple LMs using at least one calibration question; obtains, from each of the multiple LMs, an original answer based on an original question; obtains, from each of the multiple LMs, an estimation answer based on an estimation question using the determined calibration information, wherein the estimation question asks for a most popular answer to the original question among the multiple LMs; and determines a predicted answer to the original question by aggregating sets of same original answers and same estimation answers.

## Description

### FIELD OF THE INVENTION

The invention pertains to a computer-implemented method for aggregating outputs of multiple language models (LMs). Specifically, the present disclosure pertains to determining calibration information of each of the multiple LMs using at least one calibration question; obtaining, from each of the multiple LMs, an original answer based on an original question; obtaining, from each of the multiple LMs, an estimation answer based on an estimation question using the determined calibration information, wherein the estimation question asks for a most popular answer to the original question among the multiple LMs; and determining a predicted answer to the original question by aggregating sets of same original answers and same estimation answers.

### BACKGROUND

In the field of electric drive systems, it is common to encounter a multitude of parameters that need to be selected and optimized for efficient system performance. These parameters can number in the hundreds, and their optimal selection often requires the expertise of system engineers who possess extensive experience and in-depth knowledge of the specific drive systems. The complexity is further compounded by the fact that different drive systems, while sometimes similar, are rarely identical. As a result, parameters that are optimal for one system may not be directly applicable to another, necessitating a tailored approach for each new system.

Known systems typically involve the use of databases that store comprehensive technical documentation, system limits, and other relevant information about existing drive systems. These databases of systems have been created in the past serve as valuable resources for engineers who seek for answers such as to be applied parameters or the meaning of error code messages. The information contained within these databases can be represented by LMs, which can then be queried to retrieve outputs from the LMs based on an input task or question posed by the user. An LM can be a large LM (LLM) or a small LM (SLM). However, the challenge lies in determining which of the many available LMs contains the most relevant and promising outputs for the specific drive system in question. A similar scenario can also happen for an already applied system as the database information of the system is likely to be not consistently updated when various sub-systems will gain new functionalities over time. In such a case, the database of a subsystem of a different system is to be taken in consideration to receive the correct answer. The LMs may be stored in a data storage.

According to known approaches, engineers feed the known information of the databases in LMs and have to manually search through the multiple LMs, comparing the information and parameters provided by each LM to identify the most promising ones. This process is not only time-consuming but also prone to human error, as it relies heavily on the engineer's ability to accurately interpret and compare vast amounts of data. Additionally, the manual comparison of LMs may not always yield the best results, as it can be difficult to account for the subtle differences and nuances between various drive systems. Another approach would deem the majority of the same answers as the correct one. Though, if many answer are wrong, this method will fail to provide the correct answer. Though, if only a few LMs poses the knowledge to answer the question correct, the correct answer will be masked by the many wrong answers of the other LMs lacking the expert knowledge that enables answering the question correctly (in the sense of drastically increasing the chances of a correct answer).

Despite the substantial advances in the field of electric drive systems and the availability of extensive databases, there remains a need for a more efficient and reliable method to aggregate and evaluate the outputs of multiple LMs. Such a method would ideally streamline the process of identifying the most promising parameters for a given drive system, reducing the reliance on manual comparison and minimizing the risk of human error.

It is therefore a technical problem underlying the present invention to provide a method for aggregating and evaluating outputs of multiple LMs that at least partially overcomes the disadvantages of known systems.

### SUMMARY

It is an object of this invention to provide systems that overcome one or more of the disadvantages of known systems.

A first aspect of the invention provides computer-implemented method for aggregating outputs of multiple LMs, LMs, comprising: determining calibration information of each of the multiple LMs using at least one calibration question; obtaining, from each of the multiple LMs, an original answer based on an original question; obtaining, from each of the multiple LMs, an estimation answer based on an estimation question using the determined calibration information, wherein the estimation question asks for a most popular answer to the original question among the multiple LMs, determining a predicted answer to the original question by aggregating sets of same original answers and same estimation answers.

According to the present disclosure, an output or output of an LM is one possible answer to an input, wherein the input can be a question. The input may be acquired before the determining calibration information of each of the multiple LMs.

According to the present disclosure, a most popular answer is the answer that is given most frequently by the LMs (upon asking all LMs a question). For example, when asking 10 LMs "How is the weather tomorrow?" and 6 answers are "rainy", 2 answer are "sunny" and 2 answers are "cloudy but dry", the most popular answer would be "rainy".

According to the present disclosure, calibration information refers to a data stored in a data storage (also referred to as memory or storage) accessible by all LMs. The calibration data is stored as textual information. The calibration data can be created for each LM. The calibration data may be created by asking each LM one or more calibration questions (input) and storing the answer (output) in a data storage. All answers given in response to the calibration questions are presented in a contextual way. Each answer to a calibration question of each of the LMs has a context that represents the LMs' potential knowledge on the system. This context differs in dependency of the calibration question and based on the qualification question's ability of highlighting the context when considering the original question. An LM may be really good in providing technical parameters for a system, but may be bad when it comes to identifying an error message with the matching cause and/or to be taken countermeasure. Hence, by formulating an appropriate calibration question, one can extract the suitability of this LM for problem solving or initial setting up of the system. Based on the result, depending on the task, a different LM may contain more knowledge to provide a good answer to the original question.

The data storage can also be referred to as a ledger or context ledger. The calibration question may be tailored to refer to a specific application that is to be used by the user. The user may for example be an engineer or an operator. The calibration question may correspond to a specific field of application. At least one calibration question is asked before asking an original question. Though, further calibration questions may be asked before asking an original question. The calibration question maybe also related to the original question or based thereon. Each LM is asked the same calibration questions. A calibration question may be preset. A calibration question may be formulated by a user, or based on a user's input, or by an LM based on the original question. If a calibration question may be formulated in correspondence to an original question, the LMs may answer the calibration question first, before answering the original question and/or the estimation question.

Based on the answer to the calibration question (stored as the calibration data), it may be possible to estimate a knowledge of the LM for the specific application. As a LM that poses knowledge that is better suited to answer the original question over other LMs has no way of indicating this in an obvious or reliable way. This knowledge may also be referred to as hidden knowledge or expert knowledge.

According to the present disclosure, the original question is the question that is to be answered by the LMs. This could be "What voltage slope factor is desirable?" or "What means error 0x10?". This original question is asked to all LMs. This original question may be formulated based on a (original) problem at hand.

According to the present disclosure, the original answer is an answer that is given by the LMs to the original question. Such as the original question and the calibration data, the original answer given by each LM is textual and may be stored in the data storage. This data also contains which LM gave what original answer.

According to the present disclosure, the estimation question reformulates the original question in a way of asking each LM "What is the most given answer for the original question among all LMs".

According to the present disclosure, the estimation answer is the answer of each LM to the estimation question. For determining this estimation answer, each LM may take its own original answer and the calibration data of all LMs (including its own) into consideration.

According to the present disclosure, a predicted answer is the answer that is the answer among the original answers that is predicted to be the "correct" answer to the original question. This predicted answer is determined by aggregating the sets of a same original answer and a same estimation answer.

When faced with big databases that can be expressed as multiple LMs, the user is has to find a way of determining which LM offers a reliable output. The idea lies in that an LM that contains more knowledge for the current problem, is more likely to present a correct answer, compared to LMs that have less knowledge. It is however difficult to find the LM with more knowledge. Unlike humans, LMs will always present an answer to a question. It is even likely that most of the LMs may not contain sufficient information that may enable them to determine a correct answer to the original answer. Hence, the difficulty lies in identifying which LM has a high hidden knowledge, as this LM's answer is more likely to be correct.

The subject matter involves a computer-implemented method for combining outputs from multiple LMs. This method includes several key steps. Firstly, calibration information for each of the multiple LMs is determined using at least one calibration question. Calibration questions are designed to assess each model's knowledge or expertise in specific areas. This step helps in understanding the unique strengths or hidden knowledge each model might possess.

Next, each LM provides an original answer based on an original question. This original question is the primary query for which an answer is sought. Following this, each LM also provides an estimation answer to an estimation question. The estimation question asks each LM to predict what the most popular answer to the original question would be among all the LMs. This step uses the previously determined calibration information to guide the estimation process.

Finally, a predicted answer to the original question is determined by aggregating sets of identical original answers and identical estimation answers. This aggregation process involves comparing the original answers and the estimation answers to identify which answer is surprisingly popular, meaning it is not common among all LMs but only among those that poses expert knowledge. Hence, it has a higher likelihood of being correct than the answer that is most popular answer given based on the collective knowledge of the LMs (as the number of LMs with expert knowledge is smaller than the number of LMs without expert knowledge).

The advantage of this method lies in its ability to leverage the collective knowledge and hidden expertise of multiple LMs, thereby improving the accuracy of the final answer. By using calibration questions and estimation answers, the method can uncover and utilize knowledge that might be underrepresented in individual models, leading to more informed and reliable decision-making.

In a further embodiment of the method, determining the predicted answer to the original question may comprise: determining for each original answer an original ratio reflecting an occurrence distribution of each of the original answers; and determining for each estimation answer an estimation ratio reflecting an occurrence distribution of each of the estimation answers.

The method may introduce a specific mechanism for determining an original ratio for each original answer, which may reflect the occurrence distribution of each of the original answers. This mechanism may involve calculating how frequently each original answer appears among the multiple LMs, thereby providing a quantitative measure of their distribution. Additionally, the method may incorporate a mechanism for determining an estimation ratio for each estimation answer, which may also reflect the occurrence distribution of each of the estimation answers. This estimation ratio may be derived by analyzing the frequency of each estimation answer, based on the estimation question that asks for the most popular answer to the original question among the multiple LMs. By incorporating these ratios of a same original answer and a same estimation answer, the method may enhance the accuracy and reliability of the predicted answer to the original question.

The original ratio and the estimation ratio may serve as important metrics for assessing the consensus among the LMs, thereby enabling a more informed aggregation of the answers. This feature may bring a new level of granularity to the process of aggregating outputs from multiple LMs, as it may allow for a more nuanced understanding of the distribution of answers. The method may thus benefit from a more detailed analysis of the occurrence distributions, which may improve the overall effectiveness of the aggregation process. Furthermore, the inclusion of these ratios may facilitate the identification of outliers or inconsistencies among the LMs, which may be crucial for refining the predicted answer. The method may thereby achieve a higher degree of precision in determining the most accurate answer to the original question. The introduction of these specific mechanisms may also enhance the robustness of the method, as it may provide additional layers of verification and validation through the use of occurrence distributions.

Consequently, the method may be better equipped to handle variations and discrepancies in the outputs of the multiple LMs, leading to more reliable and consistent results.

In a further embodiment of the method, determining the predicted answer to the original question may comprise: determining a confidence margin for each of the sets of same original answers and same estimation answers; and determining the predicted answer using the determined confidence margin.

According to the present disclosure, the confidence margin may express how reliable the original answer of an LM is. The confidence margin may be determined based on comparing the occurrence distribution of each of the original answers and the occurrence distribution of each of the estimation answers.

The method may introduce a specific mechanism for determining the predicted answer to the original question, which may involve determining a confidence margin for each of the sets of same original answers and same estimation answers. This mechanism may enhance the accuracy of the predicted answer by incorporating an additional layer of validation through the confidence margin.

The confidence margin may serve as a measure of reliability for each set of answers, which may allow the system to weigh the answers based on their respective confidence levels. By doing so, the method may ensure that the predicted answer is not only a result of aggregating the same original and estimation answers but also takes into account the confidence associated with each set. This may bring a new feature to the method by introducing a quantitative assessment of answer reliability, which may improve the overall robustness and trustworthiness of the predicted answer.

The confidence margin may be determined using statistical or probabilistic techniques, which may provide a more nuanced understanding of the likelihood that a given set of answers is correct. This may be particularly useful in scenarios where the multiple LMs may produce varying degrees of certainty in their responses. By incorporating the confidence margin, the method may be better equipped to handle discrepancies between the outputs of the different LMs, thereby reducing the risk of erroneous predictions. Additionally, this feature may facilitate a more transparent decision-making process, as the confidence margin may offer insights into the confidence levels of the aggregated answers. This may be beneficial for users who may require a higher degree of confidence in the system's predictions, such as in critical applications where accuracy is paramount.

Overall, the introduction of the confidence margin may significantly enhance the method's capability to provide reliable and accurate predicted answers by leveraging the confidence levels of the aggregated answers.

In a further embodiment of the method, determining the confidence margin may comprise determining for each of the sets of same original answers and same estimation answers a difference between the original ratio and the estimation ratio.

The implementation may introduce a specific mechanism for determining the confidence margin by calculating the difference between the original ratio and the estimation ratio for each set of same original answers and same estimation answers. This mechanism may enhance the accuracy of the predicted answer by providing a quantitative measure of confidence in the aggregated results. For this embodiment, the confidence margin has a possible range of -100% to 100%. Typically, original answers with a high confidence margin have positive confidence margin.

The method may involve comparing the proportion of original answers to the proportion of estimation answers, which may allow for a more nuanced understanding of the reliability of each LM's output. By incorporating this step, the system may better account for variations in the performance of different LMs, thereby improving the overall robustness of the method. The determination of the confidence margin may serve as an additional layer of validation, ensuring that the aggregated answer is not only the most popular but also the most reliable. This feature may be particularly useful in scenarios where the original and estimation answers differ significantly, as it may help to identify and mitigate potential inconsistencies. The method may also benefit from this feature by enabling more informed decision-making based on the confidence levels associated with each aggregated answer. In essence, the introduction of this mechanism may provide a more comprehensive approach to aggregating outputs from multiple LMs, ultimately leading to more accurate and reliable results. The confidence margin may act as a safeguard against over-reliance on any single model, promoting a more balanced and equitable aggregation process. This feature may also facilitate the identification of outliers or anomalies in the data, which may be crucial for maintaining the integrity of the aggregated answers. By systematically evaluating the differences between original and estimation ratios, the method may achieve a higher degree of precision and reliability, thereby enhancing its overall effectiveness. The implementation of this feature may thus represent a significant advancement in the field of LM aggregation, offering a more sophisticated and reliable means of determining the most accurate answer to a given question.

In a further embodiment of the method, determining the predicted answer may comprise choosing an answer with the highest confidence margin as the predicted answer.

The method may introduce a specific mechanism of communication between components where determining the predicted answer may involve choosing an answer with the highest confidence margin as the predicted answer. This new feature may bring an enhancement to the accuracy and reliability of the predicted answer by leveraging the confidence margin as a decisive factor.

The confidence margin may be calculated based on the calibration information and the original and estimation answers provided by the multiple LMs. By selecting the answer with the highest confidence margin, the method may ensure that the most reliable and consistent answer is chosen, thereby improving the overall performance of the LM aggregation process. This approach may also help in mitigating the impact of outliers or less confident answers, which may otherwise skew the predicted answer. The introduction of the confidence margin as a criterion for determining the predicted answer may add a layer of robustness to the method, making it more resilient to variations in the outputs of the multiple LMs. Furthermore, this feature may facilitate a more nuanced and informed decision-making process, as it takes into account not only the frequency of the answers but also the confidence with which they are provided.

This may lead to a more accurate and trustworthy aggregation of the LMs' outputs, ultimately enhancing the method's effectiveness in generating reliable answers to the original questions.

In a further embodiment of the method, determining the predicted answer comprises: providing an answer with highest confidence margin to the user.

The embodiment may introduce specific mechanisms of communication between components by determining the predicted answer through providing an answer with the highest confidence margin to the user.

This mechanism may ensure that the user receives the most reliable answer based on the confidence levels calculated from the multiple LMs. Optionally, the method may additionally provide answers within a confidence margin distance of up to 20%, more preferable 10 %, below the answer with the highest confidence margin to the user, which may allow for a range of answers to be considered, thereby offering a broader perspective on the possible correct answers. This approach may enhance the robustness of the predicted answer by incorporating a small margin of error, which may account for slight variations in the confidence levels of the different LMs.

The user may then determine the predicted answer using the provided answers, which may involve selecting the answer that they deem most appropriate based on the information presented. This user involvement may introduce an interactive element to the method, allowing for human judgment to play a role in the final determination of the predicted answer. The new feature of providing answers within a confidence margin distance may bring the advantage of not solely relying on a single answer, which may reduce the risk of errors due to overconfidence in one model's output. Instead, it may consider a small range of high-confidence answers, which may improve the overall accuracy and reliability of the method. The mechanism of allowing the user to determine the predicted answer may also bring the benefit of incorporating human expertise and contextual understanding, which may be particularly useful in complex or ambiguous cases where the LMs' outputs may not be definitive. This feature may enhance the flexibility and adaptability of the method, making it more suitable for a wide range of applications where user input may be valuable.

Overall, the implementation may introduce mechanisms that improve the accuracy, reliability, and user involvement in determining the predicted answer, thereby enhancing the overall effectiveness of the method for aggregating outputs of multiple LMs.

In a further embodiment of the method, the at least one calibration question may be designed to reveal a likelihood of a LM to contain hidden knowledge only possessed by this LM.

The implementation may introduce a specific mechanism for designing calibration questions that may reveal the likelihood of a LM to contain hidden knowledge only possessed by that particular LM.

This mechanism may involve crafting calibration questions that are specifically tailored to uncover unique information or insights that a LM may have, which may not be present in other LMs. The calibration questions may be designed in such a way that they may allow for probing the LM's internal knowledge base, potentially exposing any specialized or proprietary information that the model may have been trained on. Even though that knowledge cannot be directly grasped, the likelihood of a LM to contain hidden knowledge may at least be estimated by selecting calibration questions that for example focus on specific details of the actual system which not commonly used throughout the other systems represented by the LMs.

This feature may bring an additional layer of depth to the calibration process, as it may allow for the identification of unique knowledge that may set one LM apart from others. By revealing hidden knowledge, the calibration questions may enhance the overall accuracy and reliability of the aggregated outputs, as they may provide a more nuanced understanding of each LM's capabilities. This may be particularly useful in scenarios where certain LMs may have access to specialized datasets or training materials that may not be available to other models. The implementation of such calibration questions may also facilitate a more targeted approach to aggregating answers, as it may allow for the weighting of responses based on the unique knowledge each LM may possess. This, in turn, may lead to more accurate and contextually relevant predicted answers to the original questions. The implementation may therefore contribute to a more sophisticated and effective method for aggregating outputs from multiple LMs, by leveraging the hidden knowledge that individual models may contain. This feature may also enhance the robustness of the system, as it may ensure that the aggregated outputs are informed by the most comprehensive and diverse set of knowledge available across the different LMs.

Overall, the implementation may introduce a valuable mechanism for improving the calibration and aggregation process, by focusing on the unique knowledge that each LM may bring to the table.

In a further embodiment of the method, the obtaining the estimation answer may comprise comparing, by each of the multiple LMs, the calibration information of the LM and calibration information of other LMs.

The implementation may introduce a specific mechanism for communication between components, where the obtaining of the estimation answer may involve comparing, by each of the multiple LMs, the calibration information of the LM and the calibration information of other LMs. This mechanism may allow for a more refined and accurate determination of the estimation answer by leveraging the calibration data from multiple models.

The comparison process may enhance the overall reliability and accuracy of the predicted answer to the original question by incorporating a broader range of calibration information. The new feature may bring an additional layer of validation and cross-referencing among the LMs, which may improve the robustness of the aggregated output.

By comparing calibration information across multiple models, the method may reduce the likelihood of individual model biases affecting the final predicted answer. This cross-comparison may ensure that the estimation answers are not solely reliant on the calibration data of a single model, thereby increasing the diversity and reliability of the responses. The method may also facilitate a more dynamic interaction between the LMs, where each model may adjust its estimation based on the calibration data from other models. This interaction may lead to a more consensus-driven approach in determining the most popular answer to the original question. The new feature may also contribute to a more transparent and interpretable aggregation process, as the comparison of calibration information may provide insights into how different models are calibrated and how their outputs are integrated. This transparency may be beneficial for users who require a deeper understanding of the decision-making process behind the aggregated outputs. Additionally, the method may allow for continuous improvement of the LMs, as the comparison of calibration information may highlight discrepancies and areas for further calibration refinement.

This ongoing calibration process may enhance the overall performance and accuracy of the LMs over time. The new feature may also support scalability, as the method may be applied to an increasing number of LMs without compromising the quality of the aggregated outputs. By incorporating the calibration information of other models, the method may maintain high accuracy and reliability even as the number of LMs increases.

The implementation may ultimately lead to a more robust and reliable system for aggregating outputs from multiple LMs, providing users with more accurate and dependable answers to their questions.

In a further embodiment of the method, the method may further comprise: performing an agentic interaction protocol; and storing results of the interacting with other LMs as interaction results.

The implementation may introduce a specific mechanism of communication between components by incorporating an agentic interaction protocol, or AlP, which may enable each LM to interact with each of the other LMs. This interaction may allow for a more dynamic and collaborative approach to aggregating outputs from multiple LMs, potentially enhancing the overall accuracy and reliability of the predicted answer.

The AIP may serve as a structured framework that facilitates the exchange of information and responses between the LMs, thereby allowing them to compare and contrast their individual outputs. This exchange could comprise LM's crating and asking calibration questions to other LMs. This enables LMs to make judgments about another' LM's level of expert knowledge on specific topics. Hence, this interaction may lead to a more refined aggregation process, as each LM may be able to take into account the perspectives and outputs of its counterparts. By enabling this interaction, the method may allow for a more comprehensive analysis of the original and estimation answers, which may result in a more accurate determination of the predicted answer. Furthermore, the method may include the step of storing the results of these interactions as interaction results in the context ledger (data storage) shared among all LMs.

This storage may provide a valuable repository of data that can be analyzed for patterns, trends, and insights into the behavior and performance of the LMs during the interaction process. The stored interaction results may also serve as a reference for future iterations of the method, allowing for continuous improvement and refinement of the aggregation process. The introduction of the AIP may bring about a significant enhancement to the method by fostering a collaborative environment among the LMs, which may lead to more robust and reliable outcomes. Additionally, the ability to store interaction results may offer a means of tracking the effectiveness of the interactions and identifying areas for further optimization.

Overall, the inclusion of the AIP and the storage of interaction results may represent a substantial advancement in the method for aggregating outputs of multiple LMs, potentially leading to more accurate and reliable predictions. This enhancement may be particularly valuable in complex scenarios where the aggregation of diverse outputs is critical to achieving a high level of accuracy and reliability in the final predicted answer.

In a further embodiment of the method, the set of estimation answers may be obtained using the interaction results.

The method may introduce a specific mechanism of communication between components by utilizing the interaction results to obtain the set of estimation answers.

The interaction results may serve as a critical intermediary step that facilitates the accurate aggregation of outputs from multiple LMs. By leveraging these interaction results, the method may enhance the precision and reliability of the estimation answers, which in turn may improve the overall accuracy of the predicted answer to the original question. This approach may ensure that the estimation answers are not merely speculative but are grounded in the actual performance and responses of the multiple LMs when they interact with the calibration information and the original question.

The interaction results may provide a more nuanced and comprehensive understanding of how each LM interprets and processes the original question, thereby enabling a more informed and effective aggregation of answers. This feature may bring a significant improvement to the method by ensuring that the estimation answers reflect a collective intelligence derived from the interaction of multiple models, rather than relying solely on individual outputs. Consequently, the predicted answer may be more robust and representative of the consensus among the LMs. This method may also allow for dynamic adjustments based on real-time interaction results, thereby enhancing the adaptability and responsiveness of the system to varying questions and contexts.

The inclusion of interaction results in obtaining the set of estimation answers may also facilitate a more transparent and interpretable aggregation process, as it may provide insights into the decision-making process of each LM. This transparency may be particularly valuable in applications where understanding the rationale behind the aggregated answer is crucial.

Overall, the method may benefit from a more sophisticated and context-aware approach to aggregating LM outputs, leading to improved performance and reliability in generating predicted answers.

In a further embodiment of the method, the at least one calibration question may be related to an electric mobility system.

The method may introduce a specific mechanism where the at least one calibration question is related to an electric mobility system, which may enhance the relevance and specificity of the calibration process for LMs when applied to domains involving electric mobility. This may involve tailoring the calibration questions to the unique terminologies, concepts, and scenarios pertinent to electric mobility systems, thereby potentially improving the accuracy and reliability of the LMs' outputs in this specialized field.

The calibration information derived from such domain-specific questions may allow the LMs to better understand and process inquiries related to electric vehicles, charging infrastructure, energy management, and other related topics. Consequently, the method may ensure that the LMs are more adept at providing precise and contextually appropriate answers when dealing with questions in the realm of electric mobility. This domain-specific calibration may also facilitate the aggregation of outputs from multiple LMs by aligning their understanding and responses to the specialized context, thereby potentially enhancing the overall coherence and quality of the predicted answers.

The inclusion of calibration questions related to electric mobility systems may further allow for the identification and correction of any domain-specific biases or inaccuracies that the LMs might exhibit, thereby contributing to more robust and reliable performance. Additionally, this approach may enable the method to cater to the growing demand for intelligent systems capable of handling queries related to the rapidly evolving field of electric mobility, which encompasses a wide range of technologies and applications. By focusing the calibration process on this particular domain, the method may provide a more targeted and effective means of improving the performance of LMs in answering questions pertinent to electric mobility, thereby potentially offering significant advantages in terms of accuracy, relevance, and user satisfaction.

The method may also leverage the calibration information obtained from electric mobility-related questions to refine the estimation answers provided by the LMs, thereby enhancing the overall aggregation process and the quality of the final predicted answers.

A further aspect of the invention provides a processing unit, configured to carry out the method of the first aspect and any of its embodiments.

The subject matter involves a processing unit that is specifically configured to execute a method described in previous implementations. This processing unit is an integral part of a system designed to aggregate predictions from multiple LMs for industrial drives, with the aim of enhancing error diagnosis and assistance while reducing dependence on domain experts.

In the context of this system, the processing unit is responsible for estimating the likelihood of each LM possessing hidden expertise through calibration questions, facilitating interactions between models to consult each other's information, and aggregating partial answers based on confidence margins. This approach allows for the uncovering of hidden knowledge among LMs, leading to more accurate and informed decision-making. The processing unit's configuration to carry out these functions offers significant advantages, such as improved accuracy in predictions, reduced reliance on individual models, and enhanced decision-making capabilities in complex industrial systems. By leveraging the collective expertise of multiple LMs, the processing unit contributes to a more reliable and confident prediction process, ultimately benefiting industrial sectors that rely on accurate error diagnosis and assistance.

A further aspect of the invention provides a system comprising a processing unit, multiple LMs, LMs, and a data storage, wherein the data storage comprises calibration information, and the processing unit is configured to carry out the method of the first aspect and any of its embodiments.

The subject matter described involves a system that consists of a processing unit, multiple LMs, and a data storage component. The data storage contains calibration information, which is crucial for the system's operation. The processing unit is designed to execute a specific method that has been detailed in previous implementations, specifically previous implementations.

In this context, a "processing unit" refers to a computational component responsible for executing instructions and managing the operations of the system. "Multiple language models" indicate the use of several Al-based models that are trained to understand and generate human language, each potentially possessing unique knowledge or expertise.

"Data storage" is a component that retains data, in this case, calibration information, which is used to adjust or fine-tune the system's operations for optimal performance.

The advantage of this system lies in its ability to aggregate predictions from various LMs by leveraging hidden expert knowledge. This is achieved through a novel methodology that enhances decision-making accuracy by minimizing reliance on individual models and instead harnessing collective expertise. By using calibration information, the system can better estimate the likelihood of each model possessing specific knowledge, thereby improving the overall reliability and accuracy of predictions in complex industrial settings. This approach is particularly beneficial in scenarios where domain expertise is limited or unavailable, as it allows for more informed and confident decision-making.

A further aspect of the invention provides a computer-readable medium comprising instructions which, when executed by a computer, cause the computer to carry out the method of the first aspect and any of its embodiments.

A computer-readable medium is described, which includes instructions that, when executed by a computer, cause the computer to perform the method described in any one of previous implementations. The term "computer-readable medium" refers to any physical medium that can store data and be read by a computer, such as a hard drive, CD, DVD, or flash memory. The instructions contained on this medium are designed to be executed by a computer, enabling it to carry out a specific method. The advantage of this subject matter is that it allows for the implementation of a complex method involving the aggregation of Al-based predictions, leveraging hidden expert knowledge, without requiring the presence of domain experts. This can lead to more accurate and informed decision-making in industrial settings, particularly in the context of error diagnosis and assistance for industrial drives.

A further aspect of the invention provides a computer program product comprising instructions which, when the program is executed by a computer, cause the computer to carry out the method of the first aspect and any of its embodiments.

The subject matter described involves a computer program product that includes instructions which, when executed by a computer, enable the computer to perform a method as described in any one of previous implementations.

The term "computer program product" refers to a software application or a set of software instructions that can be executed by a computer. These instructions are designed to perform specific tasks or functions when run on a computer system.

The advantage of this subject matter lies in its ability to automate the execution of a complex method for aggregating Al-based predictions by leveraging hidden expert knowledge. By incorporating the instructions into a computer program product, the method can be consistently and accurately executed by a computer, reducing the need for human intervention and minimizing the reliance on domain experts. This leads to more efficient and reliable decision-making processes in industrial settings, particularly for error diagnosis and assistance in industrial drives.

### BRIEF DESCRIPTION OF THE DRAWINGS

In the accompanying drawings,
Figure 1 illustrates a schematic representation of an exemplary system;
Figure 2 is a flowchart illustrating a method according to the present disclosure.

### DETAILED DESCRIPTION

The ability to accurately diagnose drive error and assist with diagnosis information is important for informed decision-making in various industrial sectors, such as electric drive commissioning, predictive maintenance, and energy management. However, existing methods for making predictions with foundation models often rely on individual Large Language Models (LLMs), which can be prone to inconsistencies due to variations in training data, algorithms, and architectures.

Various drive-related information sources (e.g., Customer tickets, internal support documents, manuals, expert knowledge bases, databases, technical documentation) can be used as training data to deploy or train individual LM-based solutions. These data provide different insights and perspectives about drives. Having an LM trained on these datasets will, in turn, reflect different perspectives and insights about the same drive. Training an LM with a certain subset of the training data can result in hidden knowledge or expert knowledge that is possessed only by that LM. Hence, relying on only a single LM will certainly lead to suboptimal decision-making when simply aggregating the predictions of all LMs. This creates a significant challenge for industries seeking to leverage collective knowledge and expertise to improve accuracy and make more informed decisions.

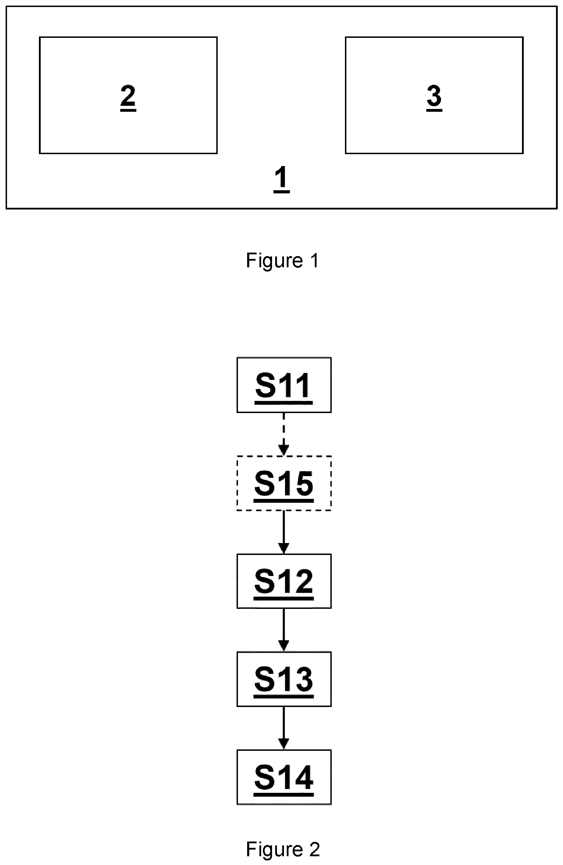

Figure 1 illustrates a system 1 according to the present disclosure. The system 1 comprises a processing unit 2, multiple LMs, and a data storage 3, wherein the data storage comprises calibration information and multiple LMs.

The processing unit 2 is configured to: determine calibration information of each of the multiple LMs using at least one calibration question: obtain, from each of the multiple LMs, an original answer based on an original question; obtain, from each of the multiple LMs, an estimation answer based on an estimation question using the determined calibration information, wherein the estimation question asks for a most popular answer to the original question among the multiple LMs; and determine a predicted answer to the original question by aggregating sets of same original answers and same estimation answers.

One exemplary use case where an original question could be asked could be for commission a drive train, esp. as an electrical drive train. One application are situations that require setting up a drive, such as determining a load to be moved, determine a preferred speed (e.g. revolutions per minute for a specific state of operation, or for achieving a high efficiency), determining a voltage constraint or required resistance. Another application is troubleshooting, as after setting up a first initial version that enables the drive to run, the system tends to present numerous error codes, which are sometimes hard to interpret, but are providing hints towards configuring the system correctly. Interpreting those error codes can be difficult as the error codes not always tend to provide straight forward clue how to resolve the problem. Furthermore, the system could also be used to determine predive servicing.

An original question could be formulated by an engineer or also by the system itself based on an upcoming error message. For example, such an original question could be *"What is the first step to resolve fault code A6A6?".*

Figure 2 is a flowchart illustrating a method according to the present disclosure and optional aspects. Based on the method, the most likely answer for this question can be found among the available LMs.

The method comprises multiple steps, whereas certain of the described steps are optional.

Before actually asking the original question, a set of calibration questions is asked. This enables LM knowledge estimation. In step S11, the LMs are asked at least one calibration question.

The answer of each LM is stored in a contextual ledger. This ledger acts as common interface storing the information that each of the LMs gathered. The data in context ledger can also be accessed by all LMs. The questions themselves can be either set a priori by domain experts (e.g., "How many error codes are there defined for an ACS880?" or "What is an absolute encoder?") or generated by an LLM (e.g., meta-prompting *"generate questions to determine if an LLM has knowledge about the ACS880 family that other LLMs have not"* or using agentic role-based discussions *"you are a service engineer*/*data scientist. Your task is to inquire about other experts' knowledge...').* These questions are designed enable evaluating whether an LM has access to hidden or expert knowledge that other models may not possess for this specific use case (calibration question).

The final original answer for each model is obtained by appending the original question to the answers of the calibration questions. Each LM's output is then used to generate a self-assessment about the likelihood that its answer is backed up by hidden (expert) knowledge.

Optionally, step S15 may comprise performing an Agentic Interaction Protocol (AIP). In this protocol, each LM has the opportunity to interact with any of the other LMs using an agentic framework. This means that each LM can have stateful interactions with other LMs, external data sources, or tools. Before asking an original question, the LMs enter a discussion and discovery phase where they can consult information about each other's training data and training pipeline based on the data in the context ledger. This approach can especially support the error diagnosis and assistance related cases.

In step S12 and S13, each LM is asked to answer two questions. The original question and the estimation question. The original question may be asked along with any external data that was used to arrive at the answer. This external data is stored in the context ledger. The estimation question asks what the LM estimates to be the most popular answer among the other models to the original question. Determining the estimation answer, by each LM, comprises using data from the context ledger. This data comprises at least the calibration data. Beyond, this data may also comprise training data of other LMs, or the data collected during the (optional) AlP.

For the exemplary original question of *"What is the first step to resolve fault code A6A6?"* an according estimation question could be *"What will the majority of the other LLMs answer to the same original question of "What is the first step to resolve fault code A6A6"?".* Each LM will answer the two questions and the result is stored (in the context ledger).

The results could be as followingly shown in Table 1, illustrating the original question, the different original answers given by the LMs and the occurrence distribution. The occurrence distribution illustrates how often a certain original answer was given over the total number of LMs answering the original question.

**Table 1 - Original question and original answers**

| *Original question: What is the first step to resolve fault code A6A6?* | | |
|---|---|---|
| | Answer | occurrence distribution |
| | Check parameters in group 99: | 60% |
| | Set Voltage Category: | 30% (correct answer) |
| | Set parameter 34.10: | 10% |

Table 2 illustrates the estimation question, the different estimation answers given by the LMs and the occurrence distribution

**Table 2 - Estimation question and estimation answers**

| *Estimation question: What will the majority of the other LLMs answer to the original question?* | | | |
|---|---|---|---|
| | Answer | occurrence distribution | |
| | Check parameters in group 99: | 75% | |
| | Set Voltage Category: | 5% | (correct answer) |
| | Set parameter 34.10: | 20% | |

Finally, there are a set of pairs of answers equal to the number of LMs (one pair per LM). A set of pairs of answers is also referred to as set of same original answers and same estimation answers. This means an original answer and a same estimation answer form as a (same) set. The distribution of all the probability of the answers may be determined. This is the occurrence distribution.

Among the answers, in step S14, all sets of same original answer and same estimation answer are aggregated to achieve a predicted answer.

This aggregation may be performed by maximizing the difference between the number of LMs that chose a particular original answer for the original question (in percentage), and the estimation answer (in percent) for the number of times that LMs estimated that the majority of the other LMs gave that same estimation answer. The results are illustrated in Table 3. The resulting difference could also be regarded as confidence margin with a range of -100% to +100%. Any result with a positive margin indicated a high chance for being the correct answer The resulting difference could also be regarded as confidence margin with a range of -100% to +100%. Any result with a positive margin indicated a high chance for being the correct answer. The answer with the highest confidence margin is deemed to be the correctly predicted answer to the original question.

**Table 3 - Aggregation of same answers using maximization**

| *The difference between the answers to the original question and the question on hidden knowledge:* | | | |
|---|---|---|---|
| | Answer | difference of the occurrence distribution | |
| | Check parameters in group 99: | 60%-75% = -15% | |
| | **Set Voltage Category:** | **30%-5% = +25%** | **(correct answer)** |
| | Set parameter 34.10: | 10%-20% = -10% | |

Based on the aggregation, the second answer of the example is deemed to be a *"surprisingly popular"* (25% > -10% > -15%). Because of the relatively high margin of +25%, there can be high confidence that the correct answer is the second one (i.e., Set voltage Category).

The determined predicted answer can then be presented to the user. In cases where multiple sets of same answers have a high confidence margin, those multiple sets of same answers could be presented as predicted answers. This might especially apply if any other set of same answers is within a margin of less than 20%, especially less than 10%, of the set of same answers with the highest confidence margin.

In cases where only one predicted answer is found, and the predicted answer contains a distinct action for solving a problem posed in the original question, the system could automatically adjust in response to the predicted answer (e.g. "close valve B", or "activate magnetic coupling"). In cases where an at least or at most value is given, the system would adjust to the threshold that is arrived earlier (e.g. for "cool system to at least 50 degrees Celsius" would result in setting 50 degrees as target value, whereas "increase current to at least 30A" would result in selecting a current of 30A).

Hence, this method allows an innovative approach that effectively harnesses collective expertise (among databases expressed as LMs) to enhance decision-making in complex systems.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. Computer-implemented method for aggregating outputs of multiple language models, LMs, comprising:
determining (S11) calibration information of each of the multiple LMs using at least one calibration question;
obtaining (S12), from each of the multiple LMs, an original answer based on an original question;
obtaining (S13), from each of the multiple LMs, an estimation answer based on an estimation question using the determined calibration information, wherein the estimation question asks for a most popular answer to the original question among the multiple LMs; and
determining (S14) a predicted answer to the original question by aggregating sets of same original answers and same estimation answers.

2. The method of claim 1,
wherein determining the predicted answer to the original question comprises:
determining for each original answer an original ratio reflecting an occurrence distribution of each of the original answers; and
determining for each estimation answer an estimation ratio reflecting an occurrence distribution of each of the estimation answers.

3. The method according to claim 2,
wherein determining the predicted answer to the original question comprises:
determining a confidence margin for each of the sets of same original answers and same estimation answers;
determining the predicted answer using the determined confidence margin.

4. The method according to claim 3,
wherein determining the confidence margin comprises:
determining for each of the sets of same original answers and same estimation answers a difference between the original ratio and the estimation ratio.

5. The method according to any one of the claims 3 or 4,
wherein determining the predicted answer comprises choosing an answer with the highest confidence margin as the predicted answer.

6. The method according to any of claims 3 or 4,
wherein determining the predicted answer comprises:
providing an answer with highest confidence margin to the user; and
determine the predicted answer by the user using the provided answers.

7. The method according to any of the preceding claims,
wherein the at least one calibration question is designed to reveal a likelihood of a LM to contain hidden knowledge only possessed by this LM.

8. The method according to any one of the preceding claims,
wherein the obtaining the estimation answer comprises:
comparing, by each of the multiple LMs, the calibration information of the LM and calibration information of other LMs.

9. The method according to the preceding claims, the method further comprising:
performing (S15) an agentic interaction protocol, AlP, wherein the AIP enables each LM to interact with each of the other LMs; and
storing results of the interacting with other LMs as interaction results.

10. The method according to claim 9,
wherein the set of estimation answers is obtained using the interaction results.

11. The method according to any of the preceding claims, wherein the at least one calibration question is related to an electric mobility system.

12. A processing unit (2), configured to carry out the method of any one of the claims 1 to 11.

13. A system (1) comprising a processing unit (2), multiple language models, LMs, and a data storage (3), wherein the data storage (3) comprises calibration information, and the processing unit is configured to carry out the method of any one of claims 1 to 11.

14. A computer-readable medium comprising instructions which, when executed by a computer, cause the computer to carry out the method of any one of claims 1 to 11.

15. A computer program product comprising instructions which, when the program is executed by a computer, cause the computer to carry out the method of any one of claims 1 to 11.
